# EUROPEAN PATENT APPLICATION

(11) **EP 3 379 473 A1**
(43) Date of publication of application: **26.09.2018**
(21) Application number: 17162666.6
(22) Date of filing: 23.03.2017
(51) Int. Cl.: G06Q 10/10

(54) **METHOD FOR PREPARING AND USING MULTIMEDIA CONTENT BY MEANS OF AN INFORMATION TECHNOLOGY MEDIUM**

(71) Applicant: Arti Grafiche Julia S.p.A., 34018 San Dorlingo della Valle (TS) (IT)
(72) Inventor: LAPENNA, Adriano, 34134 TRIESTE (IT); LAPENNA, Luca, 34123 TRIESTE (IT)
(74) Representative: Modiano, Micaela Nadia

(57) **Abstract**

A method for preparing and using multimedia content by means of an information technology medium, which comprises the following operations: a preparation step comprising:
- loading a package of original multimedia content items (11) on an information technology platform (13);
- generating a unique Internet address (14) and coupling it with the package of original multimedia content items (11), and pairing with the unique Internet address (14) a unique identification number (16) of a device for the automatic identification and/or storage of information (17), which in turn is integrated in an information technology medium (18),
- loading the Internet address (14) and the paired identification number (16) on a central database (21), and transferring the package of original multimedia content items (11), coupled to the corresponding unique Internet address URL (14), on a streaming server (22);
a utilization step comprising:
- identifying, by means of a mobile telephony device or the like (30), the unique identification number UID (16) of a device for the automatic identification and/or storage of information (17) of an information technology medium (18), and the unique Internet address URL (14) paired with the unique identification number UID (16),
- accessing, by means of the unique Internet address URL (14), the package of original multimedia content items (11),
- loading in the central database (21) one or more additional multimedia customization content items (35) that are present in the mobile telephony device or the like (30), associating them with the original multimedia package (11).

## Description

The present invention relates to a method for preparing and using multimedia content by means of an information technology medium.

So-called "Near Field Communication" (NFC in acronym) and "Radio Frequency IDentification" (RFID in acronym) technologies are currently becoming widespread in the most disparate contexts.

These technologies are increasingly widespread in airports, museums, shopping centers, for controlled accesses in general, including skiing and sports facilities, and in the field of exhibitions and meetings, where exhibitors can use them for marketing activities and to acquire targeted contacts and data.

For such uses, tickets, cards and coupons are currently provided which bear an RFID tag, are produced on a paper medium, with vinyl materials, which are flexible, mechanically strong and also resistant to water, and optionally capable of also receiving a double-sided treatment by thermal transfer printing.

For example, in a pavilion at an exhibition, the use of such technologies entails that the RFID device inserted in the card, coupon or the like, in the hand or pocket of a person who carries it, sends a signal that is picked up by antennas arranged in the same exhibition pavilion; by means of this signal, the organizer of the exhibition event can track the movements of a person in the pavilion and monitor the flows of visitors; the exhibitors can instead arrange an antenna in their own stand or near the display boards of each product line, and record the interest of participants by means of the number or duration of the visits.

The RFID device can also transmit the individual data of each person, which the exhibitor can receive by being equipped with an adapted reader.

With RFID technology, transit flows can be monitored and recorded exactly, furthermore allowing to obtain, indeed, information of a commercial kind.

NFC technology is instead intended to connect wirelessly two devices that are at a maximum distance of approximately twenty centimeters.

The connection is bidirectional, i.e., both NFC devices can send and receive information.

NFC devices are used to perform proximity payments by passing enabled smartphones close to a particular type of instrument and can be inserted, for example, in the cards of the participants to an exhibition or a meeting, and when a participant passes the card close to an electronic totem of an exhibitor equipped with an NFC device he/she can interact with it, download a brochure or an e-book, register for a competition, download images and other similar activities.

NFC devices are very cheap, eliminate the need to use paper media, and allow the end user to download only the content that he/she is interested in.

The disadvantage of this technology is that it is not straightforward to use: it needs to be explained, and if the organizer of the event does not communicate its value effectively it runs the risk of being underutilized.

In particular, currently known proximity communication technologies allow the end user to acquire information and multimedia documents in general, made available by corresponding nearby information "dispensers", such as exhibition totems and other similar systems, but they do not allow a transfer of multimedia content in the opposite direction, i.e., from one end user toward a possible additional user.

The aim of the present invention is to provide a method for preparing and using multimedia content by means of an information technology medium that is capable of obviating the cited limitations of known technologies.

Within this aim, an object of the invention is to provide a method that allows an owner of an information technology medium to customize it, utilizing its particular capabilities to share remote multimedia content.

Another object of the invention is to provide a method that can be embodied for an end user simply by means of a mobile communication device that he/she owns, such as a smartphone or a tablet, of a per se known type.

A further object of the invention is to provide a method that is easy and intuitive to use for an end user.

This aim, as well as these and other objects which will become better apparent hereinafter, are achieved by a method for preparing and using multimedia content by means of an information technology medium, characterized in that it comprises the following operations:
a preparation step comprising:
   - loading a package of multimedia content items by means of a content management system CMS module on an information technology platform;
   - generating a unique Internet address URL and coupling it with said package of multimedia content items,
   - pairing with said unique Internet address URL a unique identification number UID of a device for the automatic identification and/or storage of information, which in turn is integrated in an information technology medium,
   - loading said unique Internet address URL and the paired unique identification number UID on a central database;
   - transferring the package of multimedia content items, coupled with the corresponding unique Internet address URL, on a streaming server;
a utilization step comprising:
   - identifying, by means of a mobile telephony device or the like, the unique identification number UID of a device for the automatic identification and/or storage of information integrated in an information technology medium, and the unique Internet address URL paired with said unique identification number UID,
   - accessing, by means of said unique Internet address URL, said package of content items coupled therewith and available on said streaming server and displaying its content by means of said mobile telephony device or the like;
   - loading in said central database one or more additional multimedia content items that are present in said mobile telephony device or the like, associating them with said original multimedia package, and making them available, together with said original multimedia package, for subsequent use at the same unique Internet address URL.

Further characteristics and advantages of the invention will become better apparent from the description of a preferred but not exclusive embodiment of the method according to the invention, shown schematically, by way of non-limiting example, in the accompanying drawings, wherein:
Figure 1 is a diagram of the method for preparing and using multimedia content by means of an information technology medium according to the invention;
Figure 2 is a schematic view of a method for use by an end user.

With reference to the figures, a method for preparing and using multimedia content by means of an information technology medium comprises the following operations, divided into the two main steps of preparation and utilization of said multimedia content.

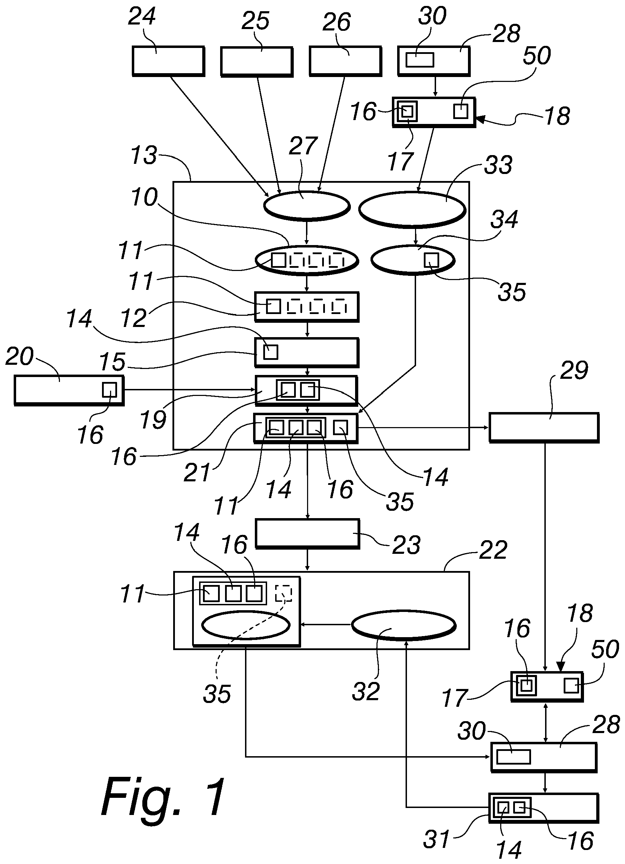

The preparation step comprises the following operations:
- loading a package of original multimedia content items 11 by means of a CMS (Content Management System) module, designated schematically by the reference numeral 12, on an information technology platform 13; the term 'information technology platform' is understood to reference a software and/or hardware base on which applications are developed and/or run; this loading operation is designated by the reference numeral 10 in Figure 1;
- generating a unique Internet address URL 14 and coupling it with the package of original multimedia content items 11, an operation shown schematically by a box designated by the reference numeral 15 in Figure 1;
- pairing with the unique Internet address URL 14 a unique identification number UID 16 of a device for the automatic identification and/or storage of information 17, which in turn is integrated in an information technology medium 18; this step is shown schematically by the box 19, while the reference numeral 20 designates a stream of unique identification numbers UID used during this step; the device for the automatic identification and/or storage of information 17 is constituted, by way of non-limiting example, by an RFID tag with NFC capability; an information technology medium 18 can be constituted by a paper medium, for example a ticket, a card or another similar and equivalent medium; it should be understood that the information technology medium 18 can also be another type of medium, such as a card made of plastic material, a bracelet, a card, and any other medium capable of supporting a device 17 as described above;
- loading the unique Internet address URL 14 and the paired unique identification number UID 16 on a central database 21;
- transferring the package of original multimedia content items 11, coupled with the corresponding unique Internet address URL 14, on a streaming server 22; this step is represented schematically by the box 23.

The platform 13 generates a data stream 29 for encoding the information technology medium 18.

The loading 10 of original multimedia content items 11 can be performed by an administrator 24, who is authorized to manage and modify all the content of each individual client and job, or by a primary client 25, i.e., an organization or person that has subscribed to a contract to access the services and products correlated with the present method according to the invention, or by a secondary client 26, i.e., a user of the platform 13 who is specifically authorized by a primary client who has subscribed to a contract and can act directly on the platform by loading content items in areas of pertinence (so-called 'slots').

The loading 10 can be performed after an authentication operation 27, i.e., a login.

By means of this preparation step, an end user 28 is offered a package of multimedia content items 11, which can be reached at a paired unique Internet address 14, which in turn is coupled with a unique identification number UID 16 of an RFID tag of the NFC type that is integrated in an information technology medium 18.

The utilization step comprises the following operations on the part of an end user 28:
- identifying, by means of a mobile telephony device or the like 30, for example a smartphone or a tablet, of a per se known type, by means of an integrated video camera or other equivalent apparatus, the unique identification number UID 16 of a device for the automatic identification and/or storage of information 17, i.e., the RFID NFC tag, which in turn is integrated in an information technology medium 18, and the unique Internet address URL 14 paired with that unique identification number UID 16; this operation is designated by the reference numeral 31;
- after authentication 32, accessing, by means of the unique Internet address URL 14, which is accessible via the smartphone or tablet with which the identification operation was performed, the package of content items 11 coupled with it and available on the streaming server 22 and displaying its content by means of the mobile telephony device or the like 30.

The utilization step, for a same end user 28, provides for the following additional operations:
- after authentication 33 by interaction between the mobile telephony device 30, for example a smartphone, and the device for the automatic identification and/or storage of information 17, i.e., the RFID tag of a ticket or other information technology medium 18, the smartphone is connected to the unique Internet address 14 by means of the unique number UID 16 of the RFID tag, one proceeds by loading in the central database 21 one or more additional multimedia customization content items 35, which are present in the mobile telephony device or the like 30, associating them with the original multimedia package 11, and making them available, together with the original multimedia package 11, for a subsequent utilization at the same unique Internet address URL 14; the operation for loading multimedia customization content items 35 is designated in Figure 1 by the reference numeral 34.

The utilization step of the method according to the invention on the part of an end user 28 is better specified hereinafter.

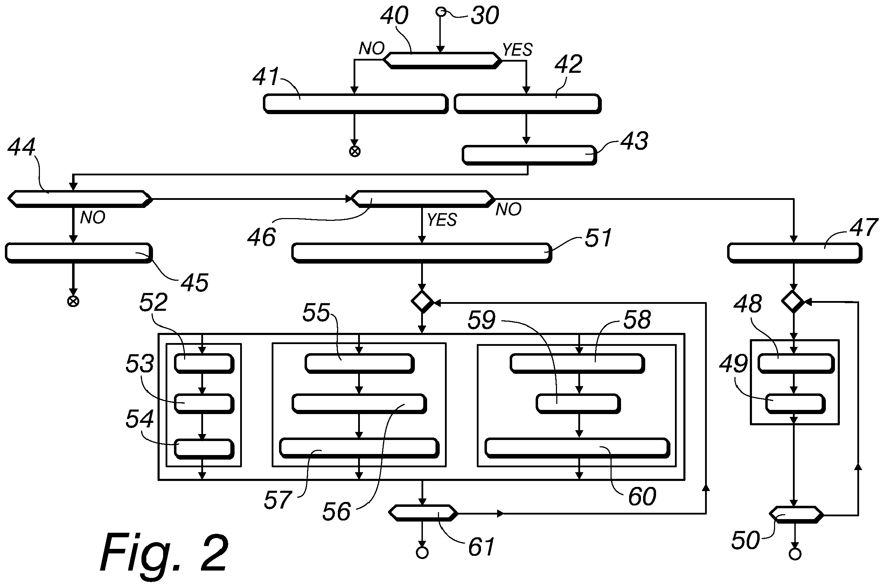

This utilization step entails that the following operations are performed by means of a mobile telephony device 30:
- checking whether there is an Internet connection, box 40 in Figure 2;
- if there is no Internet connection, then a message warns that there is no Internet connection, box 41;
- if there is an Internet connection, then reading the unique identification number UID 16 of the NFC RFID tag of the information technology medium 18, box 42, and checking whether the unique identification number UID 16 is valid, box 43;
- if the unique identification number UID 16 is valid, then checking whether this unique identification number UID 16 exists within the central database 11, box 44;
- if the unique identification number UID 16 does not exist, then a message warns of the lack of content;
- if the unique identification number UID 16 exists, then checking whether there is a paired multimedia content, the content package 11, which can be customized by the end user, box 46;
- if there is no customizable multimedia content, then showing only the possibility to display the preloaded multimedia content, box 47; at this point the user can choose to load the multimedia content from the streaming server 22 and play it on the mobile telephony device 30, boxes 48 and 49 respectively, the box 50 exemplifying the end of the operations, with preparation for a possible subsequent further playback;
- if a customizable multimedia content item exists, then showing the interface that displays the preloaded multimedia content item and allows its customization, box 51;
- selecting one of three options:
- the option of playing the preloaded multimedia content item, box 52, with consequent loading of said multimedia content item from the server 22, box 53, and subsequent playback of the content item, box 54;
- the option of selecting the loading of a multimedia customization content item 35 from a gallery of the mobile telephony device 30 or the like, box 55, with consequent selection of the multimedia customization content item 35, box 56, and loading of said multimedia customization content item in the adapted space in the central database 21, box 57;
- the option of selecting the loading of a multimedia customization content item 35 created with the camera of the mobile telephony device 30 or the like, box 58, with consequent recording of the multimedia customization content item 35 by means of a camera, box 59, and loading of said multimedia customization content item 35 in the adapted space in the central database 21, box 60;
- end of operations, box 61, with preparation for an optional subsequent new selection operation.

In summary, each information technology medium 18 contains an item of information that allows to view a video, or other multimedia content, on the mobile telephony device 30 or the like, provided with a display that reads it.

This information is used as defined in the described utilization step:
- each information technology medium 18 has a unique code, the unique identification number UID 16;
- the unique identification number UID 16 is validated by the system, which checks that it actually exists and is valid;
- if valid, the presence of a configuration in the system and the pairing of a multimedia content item with it are checked;
- if a pairing exists, the presence of one or more multimedia content items to be displayed is checked;
- all the content items are visible to the user who owns the information technology medium;
- the end user can load multimedia customization content items 35 in the database 21 so as to customize the original multimedia content package 11.

The customization method provides for the following flow of operations:
- the end user reads, with the mobile telephony device 30, the unique identification number UID of the information technology medium 18;
- the end user, by means of the mobile telephony device 30, selects an existing multimedia content item or creates a new one, which defines the multimedia customization content item 35;
- this multimedia customization content item 35 is added to any other multimedia content items that are present according to specific centrally defined configurations;
- a unique multimedia content item is optionally created as a result of the merging of the single multimedia content items.

The operation can be repeated over time and therefore it is possible to modify the content over time.

With this method according to the invention, by means of the defined flow a customizable video is essentially created which can be viewed by the bearer of the information technology medium 18 by means of his/her mobile telephony device 30. The video can be viewed by means of mobile telephony devices 30 of a per se known type, provided with NFC technology, without having to present any dedicated application.

The presence in the information technology medium 18 of an RFID NFC chip, with a unique identification code 16 and encoded with a unique URL 14, allows the innovative use of QR Code technology to extend the use of the medium also to mobile devices that are not provided with NFC technology.

A unique QR Code 50, which bears in an encoded sequence the UID 16 of the chip and the corresponding URL 14, generated during the execution of the method described above, is printed on each information technology medium 18.

The unique QR Code 50 allows to download the content items associated with the information technology medium 18, by means of an application, which is to be understood as of a known type, for reading QR Codes, which is available for all commercially available smartphones, but only by means of the method according to the invention is it possible to customize the multimedia content items associated with the information technology medium 18.

The overall functionality and associated security are made available only by virtue of the presence of an RFID chip with NFC technology inside the information technology medium 18.

The method according to the invention provides for the use of a "smart medium", i.e., the information technology medium 18, by means of which multimedia content items are accessed by using specialized portals and/or applications for smartphones and the like.

The players involved in the use of the method according to the invention can therefore be:
- a retailer: a player who sells the paper-based information technology media 18, even paired with other services, and loads its own content items on the platform 13;
- a customer/buyer: a player who purchases (or receives) from the retailer one or more information technology media 18, having the possibility to load thereon his/her own content items;
- a recipient: an end user who can access the multimedia messages and any other services that are accessible by means of the information technology medium 18.

The main purpose of the method according to the invention is identified as the capability to make available multimedia content items, such as videos, images, music and the like, on paper-based media integrated with RFID/NFC technology, preloaded by the retailer and optionally implemented and customized by the customer/buyer, in order to deliver them to a recipient, who can utilize them by using a smartphone with NFC capability, or access to a dedicated portal.

The information technology medium 18 can be constituted for example by one of the following embodiments:
- in the form of a'SmartPostCard', i.e., with an appearance and format that are similar to those of ordinary paper postcards and in any case compatible with international postal standards, so that it can be mailed by applying a simple stamp, without putting it in an envelope;
- in the form of a 'SmartGiftCard', which can be used as a smart well-wishing card, having any appearance and format at will;
- in the form of a 'SmartTicket', i.e., a smart access ticket for events, concerts and the like;
- in the form of a 'SmartVoucher', which can be used for advertising campaigns, promotional material and smart discount vouchers.

All the information technology media listed above can be provided on a medium which is printed in high-quality offset with dedicated machines.

The retailer can load and then modify content by using a dedicated area of the platform 13.

The content items can also be loaded by the customer/buyer, after the purchase of an information technology medium 18, by using a dedicated application for all systems (Android, Microsoft, BlackBerry, and iOS).

The final recipient can access the multimedia content items in the following manners:
- directly, by means of a mobile telephony device 30, such as a smartphone, with NFC capability (without the need to download any application);
- by means of a portal with access via a registered profile;
- by using an application for mobile telephony devices.

A method according to the invention as described above therefore provides for the use of the following elements:
- an information technology medium 18 with NFC-compatible integrated RFID chip, for example the commercial product Mifare Ultralight EV1 - ISO 14443/a or NTAG 213, manufactured by the company NXP;
- a back-end information technology platform 13 for implementing the management processes;
- a dedicated area on the platform 13 for loading the content items of the retailer, i.e., the CMS content management system 12;
- an application for mobile telephony devices;
- a Web portal for access.

Each retailer shall have a web interface by means of which he/she shall be able to manage the preparation and utilization method according to the invention.

The back-end information technology platform provides access to the following data:
- user profile
- preloaded multimedia content items
- business intelligence
- business analytics
- billing and accounting.

The customer/buyer can download an adapted application onto his/her smartphone or tablet and use it to upload his/her multimedia content items.

By means of this application, the customer/buyer can:
- access his/her own profile;
- view and manage personal multimedia content items;
- view any send notifications,
- view multimedia content of the received media,
- load content items onto the information technology medium (only on NFC-compatible smartphones),
- download content,
- view the nearest points of sale of similar information technology paper media,
- access information and communications from commercial partners,
- access auxiliary services.

For non NFC-compatible smartphones it is still possible to provide for resort to QR Codes as an alternative to RFID, as described above, by using the built-in camera.

The back-end information technology platform 13 supervises the following functions:
- user registry,
- content management,
- distribution of content items to applications,
- security management for access to content items,
- process management,
- accounting and billing,
- monitoring and statistics.

The platform 13 can be provided in a Cloud mode and interacts with the external elements by means of web services, in compliance with the necessary security policies.

In practice it has been found that the invention achieves the intended aim and objects.

In particular, the invention provides a method for preparing and using multimedia content by means of an information technology medium that allows an owner of an information technology medium to customize said medium by utilizing its particular capabilities to share remote multimedia content items.

Furthermore, the invention provides a method that can be performed by an end user simply by means of a mobile communication device that he/she owns, such as a smartphone or a tablet, of a per se known type.

Moreover, the invention provides a method that is easy and intuitive to utilize for an end user.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for preparing and using multimedia content by means of an information technology medium, **characterized in that** it comprises the following operations:
a preparation step comprising:
- loading a package of original multimedia content items (11) by means of a content management system CMS module (12) on an information technology platform (13);
- generating a unique Internet address URL (14) and coupling it with said package of original multimedia content items (11);
- pairing with said unique Internet address URL (14) a unique identification number UID (16) of a device for the automatic identification and/or storage of information (17), which in turn is integrated in an information technology medium (18),
- loading said unique Internet address URL (14) and the paired unique identification number UID (16) on a central database (21);
- transferring the package of original multimedia content items (11), coupled with the corresponding unique Internet address URL (14), on a streaming server (22);
a utilization step comprising:
- identifying, by means of a mobile telephony device or the like (30), the unique identification number UID (16) of a device for the automatic identification and/or storage of information (17) integrated in an information technology medium (18), and the unique Internet address URL (14) paired with said unique identification number UID (16),
- accessing, by means of said unique Internet address URL (14), said package of original content items (11) coupled therewith and available on said streaming server (22) and displaying its content by means of said mobile telephony device or the like (30);
- loading in said central database (21) one or more additional multimedia customization content items (35) that are present in said mobile telephony device or the like (30), associating them with said package of original multimedia content items (11), and making them available, together with said original multimedia package (11), for subsequent use at the same unique Internet address URL (14).

2. The method according to claim 1, **characterized in that** said device for the automatic identification and/or storage of information (17) is constituted by an RFID tag with NFC capability.

3. The method according to one or more of the preceding claims, **characterized in that** said information technology medium (18) is constituted by a paper medium, such as a ticket, or a card or another similar and equivalent medium.

4. The method according to one or more of the preceding claims, **characterized in that** a loading operation (10) can be performed following an authentication operation (27), i.e., a login.

5. The method according to one or more of the preceding claims, **characterized in that** said utilization step entails that the following operations are performed by means of a mobile telephony device (30):
- checking whether an Internet connection is present,
- if there is no Internet connection, then a message warns that no Internet connection is present;
- if there is an Internet connection, then reading the unique identification number UID (16) of the RFID NFC tag of the information technology medium (18), and checking whether the unique identification number UID (16) is valid;
- if the unique identification number UID (16) is valid, then checking whether said unique identification number UID (16) exists in the central database (11);
- if said unique identification number UID (16) does not exist, then a message warns that there is no content;
- if said unique identification number UID (16) exists, then checking whether a paired multimedia content item, the content package (11), customizable by the end user, exists;
- if a customizable multimedia content item does not exist, then displaying only the possibility to display the preloaded multimedia content;
- if a customizable multimedia content item exists, then displaying the interface that displays the preloaded multimedia content item and allows its customization;
- selecting one selectively of three options:
- the option of playing back the preloaded multimedia content, with consequent loading of said multimedia content from the server (22) and subsequent playback of the content;
- the option of selecting the loading of a multimedia customization content item (35) from a gallery of the mobile telephony device (30) or the like, with consequent selection of the multimedia customization content item (35), and loading said multimedia customization content item in the adapted space in the central database (21);
- the option of selecting the loading of a multimedia customization content item (35) provided by means of a camera of the mobile telephony device (30) or the like, with consequent recording of the multimedia customization content item (35) by means of a camera, and loading of said multimedia customization content item (35) in the adapted space in the central database (21);
- end of operations, with preparation for an optional subsequent new selection operation.

6. The method according to one or more of the preceding claims, **characterized in that** a unique QR code (50), which bears in a coded sequence the UID (16) of the device for automatic identification and/or storage of information (17) and the corresponding unique Internet address URL (14), is printed on every information technology medium (18).
